# FASCICULE DE BREVET EUROPEEN

(11) **EP 2 516 049 B1**
(45) Date de publication et mention de la délivrance du brevet: **02.09.2020**
(21) Numéro de dépôt: 10801619.7
(22) Date de dépôt: 02.12.2010
(51) Int. Cl.: B01J 8/00, B65G 69/04

(54) **DISPOSITIF ET PROCÉDÉ POUR LE CHARGEMENT DE PARTICULES SOLIDES DANS UNE ENCEINTE**
VORRICHTUNG UND VERFAHREN ZUM LADEN VON FESTPARTIKELN IN EINE KAMMER
DEVICE AND METHOD FOR LOADING SOLID PARTICLES INTO A CHAMBER

(30) Priorité: 21.12.2009 FR 0959289
(43) Date de publication de la demande: 31.10.2012
(73) Titulaire: Total Raffinage France, 92400 Courbevoie (FR)
(72) Inventeur: COTTARD, Bernard, 76430 Saint Romain de Colbosc (FR); LEROY, Pascal, 76290 Montivilliers (FR); MAYEUR, Vincent, 14800 Honfleur (FR)
(74) Mandataire: Fédit-Loriot
(86) Numéro de dépôt international: PCT/FR2010/052593
(87) Numéro de publication internationale: WO 2011/083222

(56) Documents cités:
- US-A- 3 298 748
- US-A- 5 238 035
- US-A- 5 296 202
- US-A- 5 687 780
- US-A1- 2008 219 817

## Description

L'invention concerne un dispositif de chargement de particules solides dans une enceinte, permettant notamment, grâce au réglage de la perméabilité de l'équipage mobile nécessaire à la dispersion des particules, d'améliorer la forme des profils de chargement de l'enceinte, en fonction de la vitesse de rotation dudit équipage mobile.

L'invention concerne plus particulièrement le chargement des réacteurs à lits fixes, notamment de type chimique, électrochimique, pétrolier ou pétrochimique, avec des particules solides à l'état divisé, qui peuvent par exemple se présenter sous forme de billes, de grains, de cylindres, de pastilles, de bâtonnets ou de toute autre forme, et qui sont généralement de dimensions relativement faibles.

Les particules peuvent être en particulier des tamis moléculaires ou des grains de catalyseurs solides, généralement extrudés, réalisés soit sous forme irrégulière, soit sous forme de bâtonnets mono ou multilobes, ou de sphères, dont les dimensions peuvent varier selon les cas de quelques dixièmes de millimètres à quelques centimètres.

C'est à cette application dite de « chargement dense » de grains de catalyseur dans un réacteur chimique que l'on se référera plus particulièrement dans la suite de la présente description, mais le dispositif selon l'invention s'applique au chargement de tout autre type de particules solides dans tout type d'enceinte.

Par « chargement dense », on entend au sens de la présente invention un chargement par effet de pluie optimisé afin de permettre de charger dans un minimum d'espace et un minimum de temps, un maximum de particules solides, de façon homogène et la plus uniforme possible.

On connaît un certain nombre de procédés et de dispositifs permettant d'augmenter la densité d'un lit fixe de particules de catalyseur dans un réacteur chimique. Ces procédés ont en commun l'introduction des particules à charger par le sommet du réacteur et la collision des particules individuelles, lors de leur chute, avec des déflecteurs mécaniques fixes ou mobiles, provoquant une déviation aléatoire des dites particules. Idéalement, les particules ainsi détournées de leur trajet de chute verticale tombent individuellement et librement par effet de pluie sur l'ensemble de la surface du front de remplissage où elles forment un dépôt dense et homogène. Un tel dispositif est par exemple décrit dans le document US5,238,035 A.

La Demanderesse, dans le cadre de ses efforts pour optimiser ces systèmes de chargement de réacteurs, a mis au point un dispositif de remplissage permettant, grâce à un équipage mobile destiné à la dispersion des particules solides comprenant des déflecteurs souples articulés sur un arbre en rotation de façon à pouvoir se soulever sous l'effet de la rotation de l'équipage mobile, de réduire considérablement l'encombrement stérique du système de déflecteurs et de faciliter son installation dans les réacteurs. Ce système de base est décrit dans la demande de brevet EP 0 007 854 et des améliorations de ce dispositif de remplissage sont divulguées dans les demandes EP 0 116 246, EP 0 769 462 et EP 1 776 302.

Malgré un ensemble de déflecteurs performants, le comportement des particules de catalyseur au cours du remplissage du réacteur peut être différent du comportement idéal décrit ci-dessus. Le « front de remplissage », encore appelé « profil de chargement », c'est-à-dire l'interface entre le lit catalytique et la partie non encore remplie du réacteur, peut s'écarter parfois sensiblement de l'horizontale et/ou présenter des bosses et/ou des creux sur ledit front de remplissage. Les particules de catalyseur, en particulier lorsqu'elles ont une forme anisotrope, peuvent se positionner selon des directions privilégiées, créant ainsi des chemins de passage préférentiels pour la charge liquide et le gaz réactif à travers le lit catalytique. Ceci peut entraîner un fonctionnement du réacteur qui peut devenir insatisfaisant, par exemple en terme d'hydrodynamique et, in fine, provoquer un manque à gagner pour l'exploitant.

Une action sur la vitesse de rotation de l'équipage mobile, peut permettre en partie une correction des fronts de remplissage insatisfaisants. En général, cette vitesse de rotation est augmentée au fur et à mesure du remplissage afin d'envoyer les particules au plus près des parois. Toutefois, la perméabilité de l'équipage mobile dépend fortement de la vitesse de rotation : l'augmentation de la vitesse se traduisant par une diminution notable de la perméabilité. Ceci peut avoir pour conséquence une absence, notamment partielle, ou une plus faible densité, de particules de catalyseur en certains points de la section du réacteur. Cette absence, par exemple partielle, ou cette densité plus faible peut notamment être répartie suivant un anneau concentrique par rapport à l'axe de rotation de l'équipage mobile.

Au sens de la présente invention, la perméabilité de l'équipage mobile est définie comme la proportion du poids de particules solides traversant ledit équipage sans être déviées par celui-ci sur le poids total de particules chargées, et peut varier couramment de 00 % à 50 % en poids.

Au cours de ses nombreuses recherches sur la technique du chargement dense de particules solides dans une enceinte, et notamment de grains de catalyseur dans des réacteurs chimiques de différentes hauteurs et diamètres de chargement, la Demanderesse s'est aperçue qu'en modifiant l'équipage mobile, en faisant varier le nombre de déflecteurs, les formes et dimensions de ces derniers, l'espacement entre les déflecteurs et/ou leurs positions relatives verticalement, il était possible d'améliorer les profils pour une hauteur de chute donnée. Toutefois, pour une hauteur de chute différente, ces modifications entrainent au contraire une dégradation du profil.

Une solution pourrait consister en une modification des déflecteurs au fur et à mesure du remplissage. Toutefois, cette solution implique l'arrêt du chargement, la descente d'un opérateur dans le réacteur pour changer les déflecteurs avant la reprise du chargement. Une telle solution est peu envisageable car trop longue et complexe à mettre en œuvre.

La Demanderesse a découvert qu'en modifiant uniquement la position des déflecteurs, et en particulier la distance séparant les deux niveaux supérieurs de déflecteurs, en fonction de la vitesse de rotation de l'équipage mobile, il était possible d'améliorer la planéité du profil de chargement indépendamment de la hauteur de chute des particules.

C'est ainsi que la Demanderesse a mis au point un dispositif qui, tout en étant basé sur le même principe que le système de chargement dense (dit « Densicat® ») divulgué dans EP 0 769 462, avec la même facilité de mise en place dans le réacteur à charger et de fonctionnement, permet en outre d'améliorer les profils de chargement de tout type de réacteur.

Selon un premier aspect, la présente invention a pour objet un dispositif pour le chargement, en particulier homogène et uniforme, de particules solides dans une enceinte selon la revendication 1.

Par position des éléments déflecteurs sur l'arbre central, on entend la position de ces éléments suivant la direction verticale, c'est-à-dire le long de l'arbre central.

Le réglage de cette position peut être obtenu par translation des éléments déflecteurs suivant une direction parallèle à l'axe de l'arbre central.

Selon l'invention, l'équipage mobile est ainsi équipé d'au moins un support annulaire mobile supportant les éléments déflecteurs d'au moins un étage d'éléments déflecteurs, ce support annulaire mobile étant monté coulissant sur l'arbre central et d'un support annulaire fixe supportant les éléments déflecteurs restant.

Dans un mode de réalisation l'équipage mobile peut également comprendre une pluralité de supports annulaires mobiles coulissant sur l'arbre central indépendamment les uns des autres.

De préférence, les éléments déflecteurs d'un même étage seront déplacés simultanément.

Plus précisément et pour un type dudit réglage, l'équipage mobile est conçu de manière à permettre un déplacement relatif des deux étages les plus hauts de l'équipage de sorte que la distance séparant ces deux étages les plus hauts peut être modifiée.

Par le réglage de la distance entre les deux étages les plus hauts de l'équipage mobile, il est possible de modifier la perméabilité de ce dernier en fonction de la vitesse de rotation de l'équipage et de la hauteur de chute, ce qui permet de corriger le profil de chargement en améliorant sa planéité.

Dans un premier mode de réalisation, l'étage le plus haut est fixe, les autres étages étant mobiles en translation le long de l'arbre de rotation, solidairement les uns par rapport aux autres.

Dans un deuxième mode de réalisation, l'étage le plus haut est mobile en translation le long de l'arbre de rotation, les autres étages étant fixes.

Selon l'invention, l'équipage mobile est équipé d'un support annulaire mobile supportant les éléments déflecteurs de l'étage le plus haut ou les éléments déflecteurs des autres étages, ce support annulaire mobile étant monté coulissant sur l'arbre central, et d'un support annulaire fixe supportant les éléments déflecteurs restant.

Le déplacement relatif des deux étages les plus hauts peut ainsi être obtenu de manière très simple.

On pourrait également envisager que plus d'un étage d'éléments déflecteurs soit mobile en translation. Cette mobilité pouvant par exemple être obtenue au moyen d'une pluralité de supports annulaires mobiles coulissant sur l'arbre central, de préférence indépendamment les uns des autres. Ce déplacement relatif des supports annulaires mobiles peut être obtenu, et commandé, par les moyens décrits ci-après en référence à un unique support annulaire mobile. Toutefois, d'autres moyens de commande du déplacement relatif des supports annulaires mobiles peuvent être envisagés.

Avantageusement, le support annulaire mobile est relié au support annulaire fixe par au moins une tige de commande fixée perpendiculairement auxdits supports annulaires, ladite tige de commande coulissant dans un orifice prévu à cet effet dans l'un des supports mobile et fixe, et étant solidaire de l'autre des supports fixe et mobile, la distance (d) entre les deux étages les plus hauts étant réglée par coulissement de ladite tige de commande.

De préférence, le dispositif comprend au moins deux tiges de commande, ou encore au moins trois tiges de commande réparties régulièrement autour de l'arbre central.

Les tiges de commande pourront être pourvues de butées limitant l'écartement maximal entre les supports annulaires fixe et mobile.

Plus particulièrement, un ressort pourra être monté autour de chaque tige de commande de manière à être comprimé lorsque le support annulaire mobile est rapproché du support annulaire fixe.

Cet agencement présente l'avantage de ne nécessiter qu'une pression sur le support annulaire mobile pour commander la distance entre les deux étages supérieurs, le relâchement de cette pression entrainant l'écartement des deux supports sous l'action du ressort.

Avantageusement, le dispositif comprend des moyens de commande du déplacement relatif des deux plus hauts étages permettant de régler la distance les séparant.

Le réglage de la perméabilité peut ainsi se faire de manière très simple, sans nécessiter d'interruption du chargement de particules.

Dans une première variante, ces moyens de commande peuvent consister en au moins un levier apte à exercer une pression sur le support annulaire mobile, le levier comprenant une partie verticale coulissant parallèlement à l'arbre de rotation et articulée à un bras d'actionnement, l'extrémité libre de la partie verticale étant en appui contre le dessus du support annulaire mobile.

Dans une autre variante, les moyens de commande peuvent consister en un anneau entourant le conduit d'alimentation et coulissant le long de ce dernier, sur lequel est fixé au moins une tige s'étendant parallèlement à l'arbre de rotation en direction des éléments déflecteurs, l'extrémité libre de la tige étant conformée de manière à être en appui contre le dessus du support annulaire mobile, au moins une vis en appui sur l'anneau permettant de déplacer ce dernier verticalement.

Selon encore un autre de ses aspects, l'invention a pour objet un procédé de chargement de réacteurs, selon la revendication 8.

Le réglage de ces deux seuls paramètres, et éventuellement des ouvertures des orifices d'évacuation du conduit d'alimentation, permet d'améliorer le profil de chargement.

Le procédé selon l'invention pourra être mis en œuvre au moyen d'un système de traitement, par exemple un ordinateur (ou un processeur) programmé de manière appropriée, ce système étant configuré pour déplacer les éléments déflecteurs le long de l'arbre central, par exemple via les moyens de commande du déplacement relatif des supports annulaires, et pour adapter la vitesse de rotation de l'arbre central, par exemple via la commande du moyen moteur de l'arbre central.

Selon l'invention, on réglera la distance entre les deux étages d'éléments déflecteurs les plus hauts du dispositif.

Avantageusement, la distance entre les deux étages d'éléments déflecteurs les plus hauts est maximale en début de chargement et minimale en fin de chargement.

La distance séparant les deux étages les plus hauts sera par exemple de 0 à 150 mm, de préférence de 10 à 75 mm.

La vitesse de rotation des éléments déflecteurs sera par exemple de 25 à 250 t/min, de préférence de 40 à 200 t/min.

L'invention est maintenant décrite en référence aux dessins annexés, non limitatifs, dans lesquels :
- la figure 1 est une vue schématique d'un dispositif objet de la présente invention,
- la figure 2 est une vue de profil des supports annulaires et des étages d'éléments déflecteurs de l'équipage mobile d'un dispositif objet de la présente invention, et
- les figures 3a et 3b sont des vues schématiques d'une moitié du dispositif objet de l'invention équipé d'un premier mode de réalisation des moyens de commande de la distance entre les deux étages supérieurs, ces derniers étant écartés sur la figure 3a et rapprochés sur la figure 3b,
- les figures 4a et 4b sont des vues schématiques d'une moitié du dispositif objet de l'invention équipé d'un deuxième mode de réalisation des moyens de commande de la distance entre les deux étages supérieurs, ces derniers étant écartés sur la figure 4a et rapprochés sur la figure 4b,
- les figures 5 et 6 représentent la hauteur chargée de grains de catalyseurs en fonction du rayon de l'enceinte chargée obtenue respectivement pour l'essai 1 et l'essai 2.

Dans le dispositif de chargement de la présente invention, les particules de catalyseur en provenance du moyen d'alimentation qui peut être une trémie ou tout équivalent, descendent sous l'effet de la gravité dans le conduit d'alimentation, c'est-à-dire entre les parois internes dudit conduit d'alimentation. Le conduit d'alimentation comporte à sa base au moins un orifice d'évacuation, situé au-dessus de l'équipage mobile et plus particulièrement au dessus du système de dispersion constitué par les déflecteurs. Ainsi, les particules tombent, au moins en partie, sur ledit système de dispersion entraîné en rotation par l'arbre central via l'orifice d'évacuation.

Outre une première alimentation en particules solides s'effectuant par le conduit d'alimentation au-dessus de l'équipage mobile, au moins une alimentation additionnelle peut être effectuée. Cette alimentation additionnelle peut se faire via des orifices ménagés dans le conduit d'alimentation et disposés sur ses parois verticale et/ou horizontale. Des particules peuvent ainsi tomber sur des parties des déflecteurs éloignées de l'arbre moteur. Cela peut en accroître l'homogénéité de la distribution dans l'enceinte à grande distance de l'axe central. Un choix judicieux de la ou de ces ouvertures peut permettre de remplir sélectivement et de façon dense et homogène des éventuelles portions d'enceinte excentrées par rapport à l'axe de l'équipage mobile.

Le moteur, qui entraîne en rotation l'arbre central tubulaire du dispositif de l'invention, est de préférence excentré par rapport à cet arbre et peut être alimenté par un gaz comprimé quelconque, par exemple par de l'air ou de l'azote. La transmission du mouvement rotatif du moyen moteur vers l'arbre tubulaire peut se faire par n'importe quel moyen connu approprié, par exemple par une courroie, une chaîne, un jeu de pignons, ou par une combinaison de ces moyens.

L'arbre central utilisé dans la présente invention peut être plein ou creux comme décrit dans EP 1 776 302. Cette dernière particularité peut offrir l'avantage de pouvoir disposer d'un passage au sein dudit arbre central, par exemple et, non limitativement, pour y loger des appareils de mesure du suivi du niveau du lit catalytique en cours de chargement et/ou pour aspirer les éventuelles poussières de catalyseur émises lors de ce même chargement.

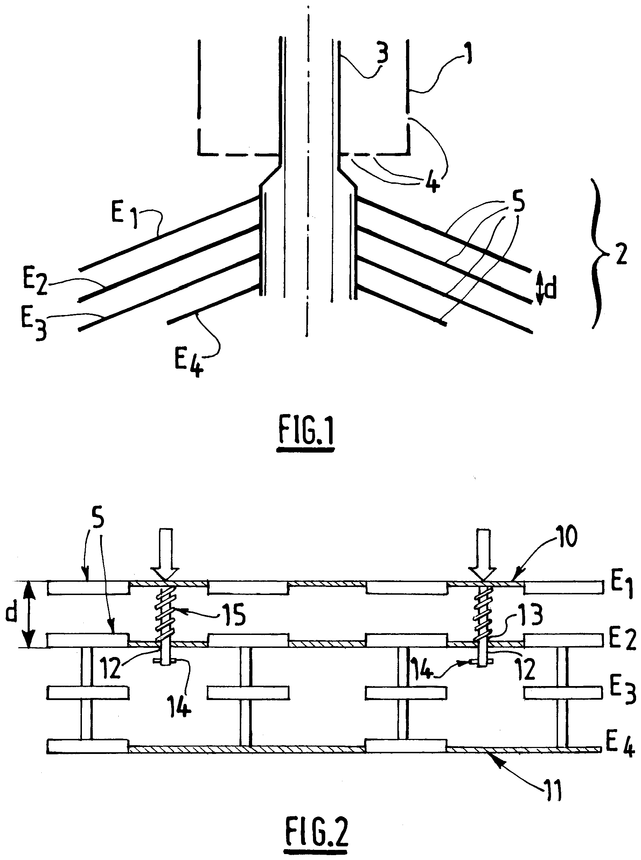

Le dispositif de la figure 1 comporte une trémie d'alimentation (non représentée), disposée au-dessus du réacteur et qui alimente, par gravité, le conduit d'alimentation (1) en particules de catalyseur.

Dans ce conduit d'alimentation (1) est disposé sensiblement sur l'axe longitudinal d'un réacteur circulaire, l'arbre (3) de l'équipage mobile (2), entraîné en rotation par un moyen moteur non représenté.

Les grains de catalyseur tombent par gravité, via des orifices d'évacuation (4) ménagés dans les parois latérale et/ou horizontale du conduit d'alimentation (1), sur le système de dispersion constitué d'éléments déflecteurs (5) fixés sur l'arbre de rotation (3) et répartis sur 4 niveaux verticaux le long de l'axe de rotation (3).

Ces orifices d'évacuation (4) sont généralement réglables en surface par l'intermédiaire d'un volet coulissant manuellement ou automatiquement (non représenté) venant obturer plus ou moins partiellement l'ouverture d'évacuation selon le débit de particules requis pour le chargement.

Sur cette figure 1, les éléments déflecteurs (5) sont disposés autour de l'arbre (3) sur plusieurs étages verticaux E1, E2, E3, E4 et articulés sur l'arbre (3) de façon à pouvoir se soulever sous l'effet de la rotation de l'équipage mobile. Ces éléments déflecteurs peuvent être répartis également à chaque étage.

Les figures 1 à 4 représentent un dispositif dont l'équipage mobile est pourvu de 4 étages d'éléments déflecteurs. On pourrait toutefois envisager un équipage à 2 étages d'éléments déflecteurs ou plus, et, de préférence, de trois ou quatre, les étages fixes sont espacés les uns des autres d'une distance comprise entre 2 et 20 centimètres et, de préférence, entre 4 et 10 centimètres.

Les éléments déflecteurs peuvent être formés de lanières dont les dimensions longitudinales peuvent être comprises entre 10 centimètres et 2 mètres, et de préférence, entre 10 cm et un mètre. Les lanières peuvent également avoir toutes formes connues dans la technique, à savoir, par exemple, rectangulaires, triangulaires ou trapézoïdales.

Chaque étage d'éléments déflecteurs peut comprendre au moins deux éléments déflecteurs, de préférence de quatre à douze et de manière encore plus préférée huit éléments déflecteurs. Ces éléments déflecteurs étant disposés autour de l'axe de rotation et ayant de préférence des formes identiques. En particulier les Y éléments déflecteurs sont disposés chacun à 360/Y° les uns des autres.

La matière constituant les lanières ou les éléments déflecteurs peut être un matériau semi-rigide, de préférence en caoutchouc souple renforcé avec une fibre textile et son épaisseur peut varier entre 2 mm à 10 mm et de préférence entre 3 et 8 mm.

Selon l'invention, l'équipage mobile est équipé d'un support annulaire mobile supportant les éléments déflecteurs de l'étage le plus haut ou les éléments déflecteurs des autres étages, ce support annulaire mobile étant monté coulissant sur l'arbre central (3), et d'un support annulaire fixe supportant les éléments déflecteurs restant.

La figure 2 représente un mode de réalisation particulier, dans lequel le support annulaire mobile (10) est celui qui supporte les éléments déflecteurs (5) de l'étage E1 le plus haut de l'équipage mobile. Le support annulaire fixe (11) supporte les éléments déflecteurs des autres étages, à savoir des étages E2, E3 et E4 dans l'exemple représenté sur les figures 1 à 4.

Le support annulaire mobile (10) est relié au support annulaire fixe (11) par au moins deux tiges de commande (12) fixées perpendiculairement aux supports annulaires (10, 11).

Ces tiges de commande (12) font saillie au-dessus des étages d'éléments déflecteurs. Elles coulissent dans des orifices (13) prévus à cet effet dans le support fixe (11), et sont solidaires du support mobile (10). Ainsi, la distance (d) entre les deux étages les plus hauts est réglée par déplacement des tiges de commande (12).

Dans l'exemple représenté, chaque tige (12) de commande est pourvue d'une butée (14) limitant l'écartement maximal entre les supports annulaires fixe et mobile.

Un ressort (15) est en outre monté autour de chaque tige de commande (12) de manière à être comprimé lorsque le support annulaire mobile est rapproché du support annulaire fixe.

Cette compression des ressorts (15) est par exemple obtenue en exerçant une pression sur le support mobile (10) (et/ou sur les tiges de commandes (12) dans une direction rapprochant le support mobile du support fixe). Le relâchement de cette pression entraîne alors l'écartement du support mobile sous l'action des ressorts (15).

La distance (d) entre les étages E1 et E2 est ainsi réglée très facilement. On pourrait également commander directement le coulissement des tiges de commande (12) suivant leur axe pour régler cette distance (d).

Dans une variante non représentée, on pourrait envisager que le support annulaire (11) des étages inférieurs E2, E3 et E4 soit mobile, le support annulaire (10) de l'étage supérieur E1 étant alors fixe. Dans ce cas là, les tiges de commandes (12) coulissent dans des orifices prévus dans le support annulaire (10) fixe et sont solidaires du support annulaire (11) mobile. La pression doit alors être exercée sur les tiges de commande (12) ou sur le support annulaire (11).

La pression sur le support annulaire mobile peut être exercée de différentes manières.

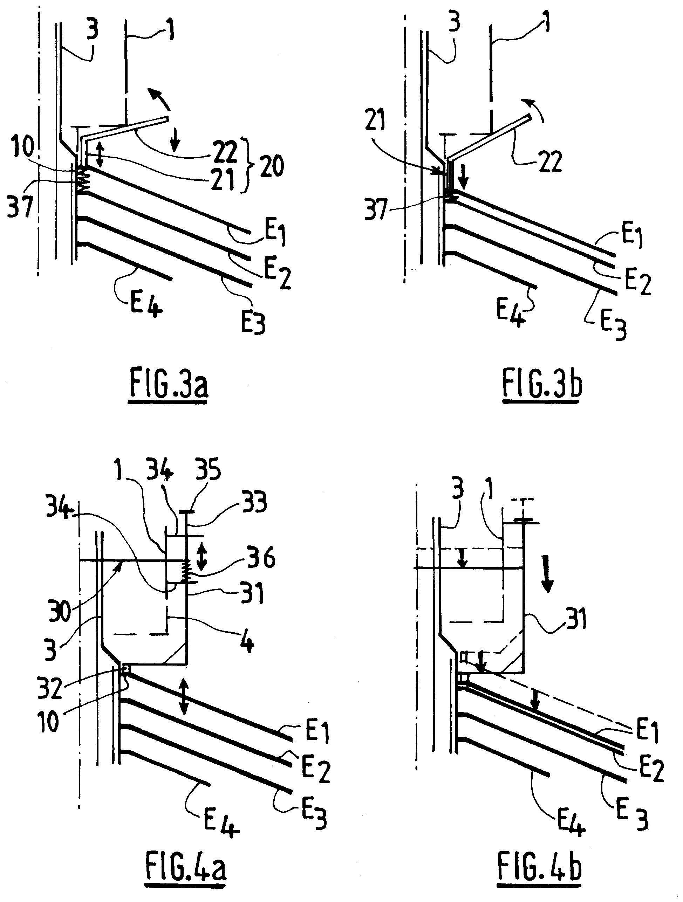

Dans une première variante, représentée sur les figures 3a et 3b, on utilise au moins un levier (20) apte à exercer une pression sur le support annulaire mobile (10).

Ce levier (20) comprend une partie verticale (21) coulissant parallèlement à l'arbre de rotation (3) et articulée à un bras d'actionnement (22), l'extrémité libre de la partie verticale étant en appui contre le dessus du support annulaire mobile (10).

Le bras d'actionnement (22) s'étend radialement dans une direction s'éloignant de l'arbre central (3). Il est suffisamment long pour saillir du conduit d'alimentation (1), et peut prendre appui sur l'extrémité inférieure de ce dernier, tel que visible sur les figures 3a et 3b.

On peut éventuellement prévoir un dispositif de rappel, du type ressort (37), pour ramener le levier dans une position dans laquelle la distance entre les supports annulaires fixe et mobile est maximale. Ce dispositif de rappel est par exemple fixé entre les supports annulaires fixe et mobile, tel que représenté sur la figure 3a.

Dans l'exemple représenté, le support annulaire mobile (10) supporte les éléments déflecteurs de l'étage E1. On pourrait toutefois prévoir que le support mobile soit celui supportant les éléments déflecteurs des autres étages (E2 à E4).

Dans une deuxième variante, représentée sur les figures 4a et 4b, on utilise un anneau (30), ou couronne, entourant le conduit d'alimentation (1) et coulissant le long de ce dernier. Cet anneau (30) coulisse de préférence au dessus des ouvertures latérales (4) les plus hautes du conduit d'alimentation (1).

Sur cet anneau (30) qui peut être facultatif, est fixée au moins une tige (31), de préférence au moins deux ou trois tiges, s'étendant parallèlement à l'arbre de rotation (3) en direction des déflecteurs.

L'extrémité libre (32) de chaque tige (31) est conformée de manière à être en appui contre le dessus du support annulaire mobile (10), au moins une vis (33), de préférence au moins deux ou trois vis (33), en appui sur l'anneau (30) permettant de déplacer ce dernier verticalement.

Cette vis (33) est guidée en translation par des supports (34) solidaires du conduit d'alimentation (1) sur la paroi latérale de ce dernier, à l'extérieur du conduit, dans une zone située au-dessus des ouvertures (4).

La montée ou la descente de la vis (33) peut être actionnée au moyen d'un volant (35) ou par tout autre moyen adéquat, par exemple grâce à des vérins hydrauliques ou pneumatiques.

Un ressort de rappel (36) peut également être prévu afin de ramener la vis (33) dans une position correspondant à une distance maximale entre les étages E1 et E2. Ce ressort (36) est par exemple monté autour de la vis (33) et disposé entre l'anneau (30) et l'un des supports (34) de la tige de sorte que sous l'effet du ressort (36), le support annulaire mobile (10) s'écarte du support annulaire fixe des étages inférieurs.

Ces modes de réalisation ont été décrits pour un dispositif comportant 4 étages de déflecteurs. Ils peuvent toutefois être adaptés à des dispositifs comportant au moins deux étages d'éléments déflecteurs.

### Exemples

La Demanderesse a mis en œuvre le dispositif objet de la présente invention sur une maquette représentative d'une enceinte type d'un réacteur chimique cylindrique utilisé dans ses raffineries.

Cette maquette présente les dimensions suivantes :
- hauteur : 5, 00 m,
- diamètre : 3,80 m,

### Conditions de réalisation des essais

- type de catalyseur : Al₂O₃ imprégnée avec un liquide organique afin d'obtenir une densité supérieure à 0,9,
- dimensions moyennes des grains de catalyseur : forme trilobé, diamètre 1,5 mm et longueur moyenne 3,5 mm,
- quantité de catalyseur chargée : 2 tonnes,
- 4 niveaux de lanières,
- 8 lanières par niveau, dont 4 sur le dernier étage,
- dimensions de toutes les lanières : longueur 55 cm, petite largeur 7cm et grande largeur 12 cm, épaisseur 6 mm,
- lanières de forme triangulaires telles que décrites dans EP 0 769 362,
- arbre central de rotation creux.

### Particularités pour l'essai 1 : configuration de fin de chargement

Le chargement a été réalisé avec un équipage mobile pour lequel la distance (d) entre les étages E1 et E2 correspond à la distance habituelle entre les deux étages les plus hauts, soit d= 50 mm, et avec un équipage mobile pour lequel la distance (d) entre les étages E1 et E2 les plus hauts est réglée à d=0 mm (superposition des deux étages).

Les conditions de réalisation de cet essai sont les suivantes :
- débit d'alimentation de l'équipage mobile en grains de catalyseur : =30 T/h,
- vitesse de rotation de l'équipage mobile : 120-125 tours par minute,
- ouverture des 9 orifices d'évacuation latérales et 15 horizontales,
- temps du chargement : 2 minutes,
- hauteur de chute des grains de catalyseur : 1,5 mètre.

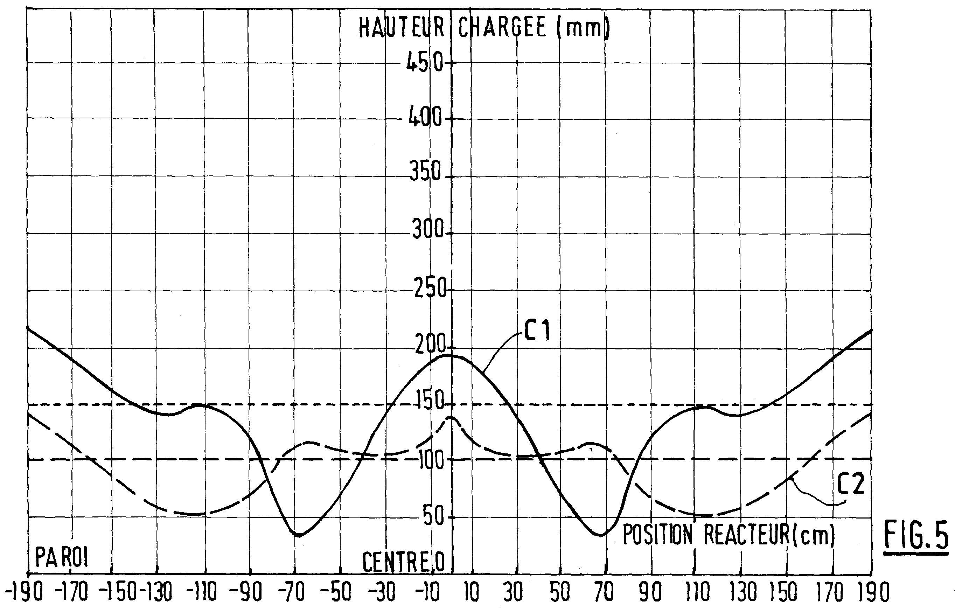

Les profils de chargement sont représentés sur la figure 5, sur laquelle, la hauteur en millimètres de grains de catalyseur chargés lors de l'essai est en ordonnée et le rayon en centimètres de l'enceinte chargée est en abscisse. Chacun des points constitutifs des deux courbes sont des valeurs moyennes des hauteurs mesurées à différents endroits de la circonférence correspondante.

La courbe C1 correspond à l'essai pour lequel d= 50 mm et la courbe C2 correspond à l'essai pour lequel d=0 mm.

Sur cette figure 5, la ligne horizontale d'ordonnée 150 mm correspond à la hauteur moyenne du profil de la courbe C1 et la ligne horizontale d'ordonnée 100 mm correspond à la hauteur moyenne du profil de la courbe C2. Cela permet de quantifier les défauts de chargement par rapport à une hauteur moyenne théorique.

L'augmentation de la perméabilité qui résulte de la superposition des étages E1 et E2 (courbe C2), permet de combler le défaut de catalyseur visible en r= 70 cm sur la courbe C1. Le profil légèrement en creux en r=120cm observé pour la courbe C2 peut être corrigé en modifiant la vitesse de rotation et éventuellement les ouvertures de la machine.

### Particularités de l'essai 2 : configuration de début de chargement

Le chargement a été réalisé avec un équipage mobile pour lequel la distance (d) entre les étages E1 et E2 correspond à la distance habituelle entre les deux étages les plus hauts, soit d= 50 mm, et avec un équipage mobile pour lequel la distance (d) entre les étages E1 et E2 les plus hauts est réglée à d=73 mm.

Les conditions de réalisation de cet essai sont les suivantes :
- débit d'alimentation de l'équipage mobile en grains de catalyseur : = 30 T/h,
- vitesse de rotation de l'équipage mobile : 71-72 tours par minute,
- ouverture des 15 orifices d'évacuation latérales et 9 horizontales,
- temps du chargement : 2 minutes,
- hauteur de chute des grains de catalyseur : 4,3 mètres.

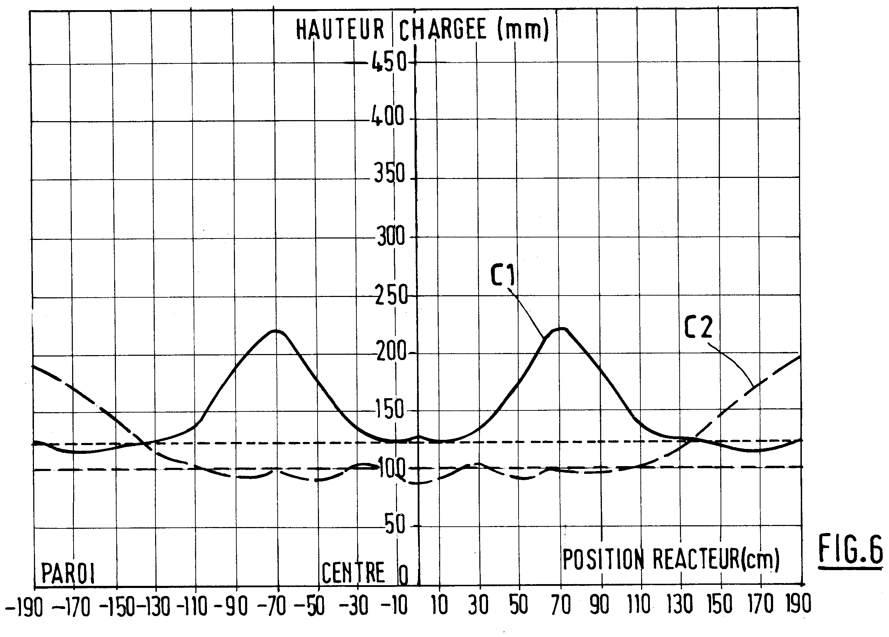

Les profils de chargement sont représentés sur la figure 6 sur laquelle, la hauteur en millimètres de grains de catalyseur chargés lors de l'essai est en ordonnée et le rayon en centimètres de l'enceinte chargée est en abscisse. Chacun des points constitutifs des deux courbes sont des valeurs moyennes des hauteurs mesurées à différents endroits de la circonférence correspondante.

La courbe C1 correspond à l'essai pour lequel d= 50 mm et la courbe C2 correspond à l'essai pour lequel d=73 mm.

Sur cette figure 6, la ligne horizontale d'ordonnée 140 mm correspond à la moyenne du profil de la courbe C1 et la ligne horizontale d'ordonnée 100 mm correspond à la moyenne du profil de la courbe C2. Cela permet de quantifier les défauts de chargement par rapport à une hauteur moyenne théorique.

En éloignant l'étage 1 de l'étage 2, la perméabilité de l'équipage mobile diminue, ce qui a comme conséquence d'éviter la suralimentation observée en r=70 cm pour la courbe C1. Pour la courbe C2, la vitesse de rotation est trop élevée, conduisant à une suralimentation des parois en catalyseur.

Ces essais enseignent que l'utilisation d'un dispositif conforme à la présente invention permet d'ajuster la perméabilité de l'équipage mobile du dispositif de dispersion par la modification de la distance séparant les étages de déflecteurs les plus hauts (E1 et E2), améliore très nettement le profil de chargement d'un lit catalytique dans un réacteur chimique ou, par extension, le front de chargement de particules solides dans une enceinte.

## Revendications

1. Dispositif pour le chargement de particules solides dans une enceinte, comprenant :
- un moyen d'alimentation en particules solides à distribuer, apte à être disposé sur la partie supérieure de l'enceinte à charger, ledit moyen déversant lesdites particules solides de façon sensiblement verticale dans un conduit d'alimentation (1),
- un équipage mobile (2), disposé au-dessous du conduit d'alimentation (1) et destiné à être disposé en tout ou partie à l'intérieur de l'enceinte, comprenant un arbre central (3) sensiblement vertical entraîné en rotation par un moyen moteur et des éléments déflecteurs (5) solidaires en rotation dudit arbre, disposés autour de l'arbre sur plusieurs étages (E1-E4) verticaux, ces éléments déflecteurs étant articulés de façon à pouvoir se soulever sous l'effet de la rotation de l'équipage mobile,
- le conduit d'alimentation (1) entourant au moins partiellement ledit arbre central et comportant au moins un orifice d'évacuation (4) des particules solides disposé sur une paroi latérale et/ou horizontale,
ce dispositif étant **caractérisé en ce que** l'équipage mobile (2) est équipé d'un support annulaire mobile en translation (10, 11) supportant les éléments déflecteurs (5) de l'étage (E1) le plus haut ou les éléments déflecteurs des autres étages (E2-E4), ce support annulaire mobile (10, 11) étant monté coulissant sur l'arbre central, et d'un support annulaire fixe (11, 10) supportant les éléments déflecteurs restant.

2. Dispositif selon la revendication 1, **caractérisé en ce que** le support annulaire mobile (10, 11) est relié au support annulaire fixe (11, 10) par au moins une tige de commande (12) fixée perpendiculairement auxdits supports annulaires, ladite tige de commande coulissant dans un orifice (13) prévu à cet effet dans l'un des supports mobile et fixe, et étant solidaire de l'autre des supports fixe et mobile, la distance (d) entre les deux étages les plus hauts étant réglée par coulissement de ladite tige de commande.

3. Dispositif selon la revendication 2, **caractérisé en ce que** les tiges de commande (12) sont pourvues de butées (14) limitant l'écartement maximal entre les supports annulaires fixe et mobile.

4. Dispositif selon l'une des revendications 2 ou 3, **caractérisé en ce qu'**un ressort (15) est monté autour de chaque tige de commande (12) de manière à être comprimé lorsque le support annulaire mobile est rapproché du support annulaire fixe.

5. Dispositif selon l'une des revendications 1 à 4, **caractérisé en ce qu'**il comprend des moyens de commande du déplacement relatif des supports annulaires mobiles permettant de régler la distance les séparant.

6. Dispositif selon l'une des revendications 1 à 5, **caractérisé en ce qu'**il comprend au moins un levier (20) apte à exercer une pression sur le support annulaire mobile (10, 11), le levier comprenant une partie verticale (21) coulissant parallèlement à l'arbre de rotation (3) et articulée à un bras d'actionnement (22), l'extrémité libre de la partie verticale étant en appui contre le dessus du support annulaire mobile (10, 11).

7. Dispositif selon l'une des revendications 1 à 6, **caractérisé en ce qu'**il comprend un anneau (30) entourant le conduit d'alimentation (1) et coulissant le long de ce dernier, sur lequel est fixé au moins une tige (31) s'étendant parallèlement à l'arbre de rotation en direction des éléments déflecteurs, l'extrémité libre (32) de la tige étant conformée de manière à être en appui contre le dessus du support annulaire mobile, au moins une vis (33) en appui sur l'anneau permettant de déplacer ce dernier verticalement.

8. Procédé de chargement de réacteurs, notamment pétroliers, chimiques ou pétrochimiques utilisant le dispositif selon l'une quelconque des revendications 1 à 7, dans lequel on règle la position des éléments déflecteurs (5) sur l'arbre central (3), la distance (d) entre les deux étages d'éléments déflecteurs les plus hauts du dispositif et la vitesse de rotation de l'équipage mobile en fonction de la hauteur de chargement, ce qui permet d'améliorer la planéité du profil de chargement.

9. Procédé de chargement de réacteur selon la revendication 8, dans lequel la distance (d) entre les deux étages d'éléments déflecteurs les plus hauts est maximale en début de chargement et minimale en fin de chargement.

10. Procédé de chargement de réacteur l'une des revendications 8 ou 9, dans lequel la distance (d) séparant les deux étages les plus hauts est de 0 à 150 mm, de préférence de 10 à 75 mm.

11. Procédé de chargement de réacteur selon l'une des revendications 8 à 10, dans lequel la vitesse de rotation des éléments déflecteurs (6) est de 25 à 250 t/min, de préférence de 40 à 200 t/min.

## Patentansprüche

1. Vorrichtung zum Laden von Festpartikeln in eine Kammer, die Folgendes umfasst:
- ein Zuführmittel von Festpartikeln, die zu verteilen sind, das geeignet ist, um auf dem oberen Teil der zu beladenden Kammer angeordnet zu sein, wobei das Mittel die Festpartikel im Wesentlichen vertikal in eine Zuführleitung (1) schüttet,
- eine bewegliche Ausrüstung (2), die unterhalb der Zufuhrleitung (1) angeordnet ist und dazu bestimmt ist, ganz oder teilweise in dem Inneren der Kammer angeordnet zu sein, die eine zentrale Welle (3) umfasst, die im Wesentlichen vertikal ist, die in Drehung von einer Antriebsvorrichtung und Ablenkelementen (5) angetrieben ist, die drehfest mit der Welle auf mehreren vertikalen Stufen (E1 bis E4) um die Welle angeordnet sind, wobei diese Ablenkelemente derart angelenkt sind, dass sie sich unter der Wirkung der Drehung der beweglichen Ausrüstung anheben können,
- wobei die Zufuhrleitung (1), die die zentrale Welle mindestens teilweise umgibt und mindestens eine Auslassöffnung für Festpartikel (4) umfasst, die auf einer seitlichen und/oder horizontalen Wand angeordnet ist,
Vorrichtung **dadurch gekennzeichnet, dass** die bewegliche Ausrüstung (2) mit einem ringförmigen Träger, der in Verschiebung (10, 11) beweglich ist, ausgestattet ist, der die Ablenkelemente (5) der höchsten Stufe (E1) oder die Ablenkelemente der anderen Stufen (E2 bis E4) trägt, wobei dieser bewegliche ringförmige Träger (10, 11) gleitend auf der zentralen Welle montiert ist, und mit einem feststehenden ringförmigen Träger (11, 10), der die restlichen Ablenkelemente trägt.

2. Vorrichtung nach Anspruch 1, **dadurch gekennzeichnet, dass** der bewegliche ringförmige Träger (10, 11) mit dem feststehenden ringförmigen Träger (11, 10) durch mindestens einen Steuerschaft (12) verbunden ist, der senkrecht zu den ringförmigen Trägern befestigt ist, wobei der Steuerschaft in einer Öffnung (13) gleitet, die zu diesem Zweck in einem des beweglichen und des feststehenden Trägers vorgesehen und mit dem anderen des feststehenden und des beweglichen Trägers fest verbunden ist, wobei der Abstand (d) zwischen den zwei höchsten Stufen durch Gleiten des Steuerschafts reguliert ist.

3. Vorrichtung nach Anspruch 2, **dadurch gekennzeichnet, dass** die Steuerschäfte (12) mit Anschlägen (14) versehen sind, die den maximalen Abstand zwischen dem feststehenden und dem beweglichen ringförmigen Träger begrenzen.

4. Vorrichtung nach einem der Ansprüche 2 oder 3, **dadurch gekennzeichnet, dass** eine Feder (15) um jeden Steuerschaft (12) derart montiert ist, dass sie zusammengedrückt wird, wenn der bewegliche ringförmige Träger dem feststehenden ringförmigen Träger angenähert wird.

5. Vorrichtung nach einem der Ansprüche 1 bis 4, **dadurch gekennzeichnet, dass** sie Mittel zum Steuern der Relativverlagerung der beweglichen ringförmigen Träger umfasst, die es erlauben, den Abstand zu regulieren, der sie voneinander trennt.

6. Vorrichtung nach einem der Ansprüche 1 bis 5, **dadurch gekennzeichnet, dass** sie mindestens einen Hebel (20) umfasst, der dazu geeignet ist, einen Druck auf den beweglichen ringförmigen Träger (10, 11) auszuüben, wobei der Hebel einen vertikalen Teil (21) umfasst, der parallel zu der Rotationswelle (3) gleitet und an einem Betätigungsarm (22) angelenkt ist, wobei das freie Ende des vertikalen Teils gegen die Oberseite des beweglichen ringförmigen Trägers (10, 11) anliegt.

7. Vorrichtung nach einem der Ansprüche 1 bis 6, **dadurch gekennzeichnet, dass** sie einen Ring (30) umfasst, der die Zufuhrleitung (1) umgibt und entlang dieser Letzteren gleitet, auf dem mindestens ein Schaft (31) befestigt ist, der sich parallel zu der Rotationswelle in Richtung der Ablenkelemente erstreckt, wobei das freie Ende (32) des Schafts derart ausgestaltet ist, dass es gegen die Oberseite des beweglichen ringförmigen Trägers anliegt, wobei mindestens eine Schraube (33) in Anlage an dem Ring es diesem Letzteren erlaubt, sich vertikal zu verlagern.

8. Verfahren zum Laden von Reaktoren, insbesondere von Erdöl-, chemischen oder petrochemischen Reaktoren, unter Verwendung der Vorrichtung nach einem der Ansprüche 1 bis 7, wobei die Position der Ablenkelemente (5) auf der zentralen Welle (3), der Abstand (d) zwischen den zwei höchsten Stufen der Ablenkelemente der Vorrichtung, und die Drehzahl der beweglichen Ausrüstung in Abhängigkeit von der Ladehöhe reguliert werden, was es erlaubt, die Ebenheit des Ladeprofils zu verbessern.

9. Reaktorladeverfahren nach Anspruch 8, wobei der Abstand (d) zwischen den zwei höchsten Stufen derAblenk elemente zu Beginn des Ladens maximal und am Ende des Ladens minimal ist.

10. Reaktorladeverfahren nach Anspruch 8 oder 9, wobei der Abstand (d), der die zwei höchsten Stufen trennt, 0 bis 150 mm, vorzugsweise 10 bis 75 mm beträgt.

11. Reaktorladeverfahren nach einem der Ansprüche 8 bis 10, wobei die Drehzahl der Ablenkelemente (6) 25 bis 250 U/Min., vorzugsweise 40 bis 200 U/Min. beträgt.

## Claims

1. A device for loading solid particles into a chamber, comprising:
- a means for supplying solid particles to be distributed, which can be arranged on the upper part of the chamber to be loaded, said means discharging said solid particles in a substantially vertical manner into a supply channel (1),
- a mobile assembly (2) arranged below the supply channel (1) and intended to be arranged entirely or partly inside the chamber, comprising a substantially vertical central shaft (3), rotated by a driving means, and deflector elements (5) which are constrained to rotate with said shaft and arranged around the shaft at a plurality of vertical stages (E1-E4), said deflector elements being hinged such that they can be moved upwards under the effect of rotation of the mobile assembly,
- the supply channel (1) which at least partially surrounds said central shaft and comprises at least one solid-particle-discharge hole (4) arranged on a side wall and/or horizontal wall,
said device being **characterised in that** the mobile assembly (2) is equipped with an annular support (10, 11), which is translatably movable and supports the deflector elements (5) of the highest stage (E1) or the deflector elements of the other stages (E2-E4), said mobile annular support (10, 11) being slidably mounted on the central shaft, and equipped with a fixed annular support (11, 10) supporting the remaining deflector elements.

2. The device according to claim 1, **characterised in that** the mobile annular support (10, 11) is connected to the fixed annular support (11, 10) by at least one control rod (12) attached perpendicularly to said annular supports, said control rod sliding in a hole (13) provided for this purpose in one of the mobile and fixed supports and being rigidly connected to the other fixed and mobile supports, the distance (d) between the two highest stages being adjusted by sliding said control rod.

3. The device according to claim 2, **characterised in that** the control rods (12) are provided with stops (14) which limit the maximum spacing between the fixed and mobile annular supports.

4. The device according to any one of claims 2 or 3, **characterised in that** a spring (15) is mounted around each control rod (12) so as to be compressed when the mobile annular support is brought closer to the fixed annular support.

5. The device according to any one of claims 1 to 4, **characterised in that** it comprises means for controlling the relative displacement of the mobile annular supports, making it possible to adjust the distance separating them.

6. The device according to any one of claims 1 to 5, **characterised in that** it comprises at least one lever (20) which can exert pressure on the mobile annular support (10, 11), the lever comprising a vertical part (21) which slides in parallel with the rotary shaft (3) and is hinged to an actuating arm (22), the free end of the vertical part bearing against the top of the mobile annular support (10, 11).

7. The device according to any one of claims 1 to 6, **characterised in that** it comprises a ring (30) which surrounds and slides along the supply channel (1), to which there is attached at least one rod (31) extending in parallel with the rotary shaft in the direction of the deflector elements, the free end (32) of the rod being shaped so as to bear against the top of the mobile annular support, at least one screw (33) bearing against the ring to displace said ring vertically.

8. A method for loading reactors, in particular oil, chemical or petrochemical reactors, using the device according to any one of claims 1 to 7, wherein the position of the deflector elements (5) on the central shaft (3), the distance (d) between the two stages of the highest deflector elements of the device, and the rotational speed of the mobile assembly are adjusted depending on the loading height, which makes it possible to improve the flatness of the loading profile.

9. The reactor loading method according to claim 8, wherein the distance (d) between the two stages of the highest deflector elements is at its maximum at the beginning of loading and at its minimum at the end of loading.

10. The reactor loading method according to any one of claims 8 or 9, wherein the distance (d) separating the two highest stages is from 0 to 150 mm, preferably from 10 to 75 mm.

11. The reactor loading method according to any one of claims 8 to 10, wherein the rotational speed of the deflector elements (6) is from 25 to 250 rpm, preferably from 40 to 200 rpm.
